# FASCICULE DE BREVET EUROPEEN

(11) **EP 1 414 657 B1**
(45) Date de publication et mention de la délivrance du brevet: **16.11.2005**
(21) Numéro de dépôt: 02760288.7
(22) Date de dépôt: 29.07.2002
(51) Int. Cl.: B60C 19/08, B60C 1/00, B29C 47/04

(54) **PROFILE EXTRUDE EN CAOUTCHOUC, SON PROCEDE D'OBTENTION ET PNEUMATIQUE L'INCORPORANT**
STRANGGEPRESSTES GUMMIPROFIL, SEIN HERSTELLUNGSVERFAHREN UND DIESES ENTHALTENDER LUFTREIFEN
EXTRUDED RUBBER PROFILE, METHOD FOR OBTAINING SAME AND TYRE INCORPORATING SAME

(30) Priorité: 30.07.2001 FR 0110215
(43) Date de publication de la demande: 06.05.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: LAMOINE, Philippe, F-63000 Clermont-Ferrand (FR); MICOUIN, Jean-Marie, F-63140 Chatel-Guyon (FR)
(74) Mandataire: Bauvir, Jacques
(86) Numéro de dépôt international: PCT/EP2002/008417
(87) Numéro de publication internationale: WO 2003/016077

(56) Documents cités:
- EP-A- 1 103 391
- WO-A-00/27655
- US-B2- 6 399 692
- DATABASE WPI Week 200047 Derwent Publications Ltd., London, GB; AN 2000-518575 XP002219555 -& JP 2000 185519 A (SUMITOMO)
- DATABASE WPI Week 199846 Derwent Publications Ltd., London, GB; AN 1998-537587 XP002219556 & JP 10 237223 A (SUMITOMO, SANKEN) cité dans la demande
- DATABASE WPI Week 199944 Derwent Publications Ltd., London, GB; AN 1999-522034 XP002219557 -& JP 11 227415 A (BRIDGESTONE)
- DATABASE WPI Week 198741 Derwent Publications Ltd., London, GB; Class 0, AN 1987-286878 XP002219558 -& JP 62 198433 A (BANDO CHEM.)

## Description

La présente invention concerne un profilé extrudé constitué d'une composition de caoutchouc réticulable, un procédé d'obtention de ce profilé, une bande de roulement pour pneumatique à base dudit profilé extrudé et réticulé, et un pneumatique comportant cette bande de roulement.

L'invention s'applique notamment au bon fonctionnement des appareils électroniques qui sont embarqués sur un véhicule équipé de tels pneumatiques, en particulier sur un véhicule de type tourisme. Ainsi, l'invention s'applique par exemple à la qualité de la réception d'ondes radio à partir d'un appareil radio prévu à l'intérieur d'un tel véhicule, et/ou à la fiabilité d'un dispositif électronique prévu à l'intérieur d'un véhicule ou d'un pneumatique équipant ce véhicule.

On sait que les pneumatiques d'un véhicule se chargent et se déchargent par effet triboélectrique en roulage, et que la charge et la décharge correspondantes interfèrent parfois via des perturbations électromagnétiques, dans des conditions météorologiques particulières, avec l'électronique embarquée sur le véhicule, par exemple avec un appareil radio qui est embarqué dans le véhicule, et plus particulièrement lorsque ledit appareil est utilisé en modulation d'amplitude.

Il se produit notamment, lors du passage d'un premier tronçon de roulage à un second tronçon de roulage qui lui succède et qui présente des caractéristiques physiques différant de celles dudit premier tronçon, par exemple une conductivité électrique et/ou une structure et/ou un relief différents, une décharge brutale par la bande de roulement de chaque pneumatique de la charge accumulée sur ledit premier tronçon.

De tels tronçons successifs de roulage peuvent par exemple être respectivement constitués d'un matériau électriquement isolant, tel que de l'asphalte, et d'un matériau électriquement conducteur, tel que celui utilisé pour des joints métalliques d'un pont, pour des plaques d'égout ou pour des rails de chemins de fer.

On sait également que ces décharges brutales et les perturbations électromagnétiques pouvant en résulter sont d'autant plus marquées que le matériau constituant la bande de roulement est notamment plus électriquement isolant, lors du passage en roulage d'un même premier tronçon à un même second tronçon.

Or, il se trouve que nombre de pneumatiques actuels sont caractérisés par une teneur élevée en charge renforçante non électriquement conductrice, telle que la silice, avec comme effet avantageux recherché de réduire les pertes hystérétiques en roulage et, par conséquent, la résistance au roulement des pneumatiques, en sorte que la consommation de carburant du véhicule correspondant est également réduite.

Un inconvénient de ces pneumatiques réside dans la résistivité relativement élevée du matériau de la bande de roulement, ce qui a parfois pour effet de générer lesdites perturbations électromagnétiques, sous certaines conditions météorologiques.

Le document de brevet japonais JP-A-10 237223 divulgue une composition de bande de roulement pour pneumatique présentant une résistivité électrique réduite qui comprend essentiellement un élastomère diénique, de la silice et un sel d'un métal alcalin ou alcalino-terreux, tel que le perchlorate de lithium, ce sel étant solvaté par un composé à base d'un diester, tel qu'un diester d'acide adipique.

Le document de brevet américain US-A-6 075 092 divulgue une composition de caoutchouc présentant des propriétés hystérétiques et de mise en oeuvre améliorées, ainsi que des propriétés anti-statiques. Cette composition comprend de la silice et un polyéther constitué d'un terpolymère d'oxyde d'éthylène, d'oxyde de propylène et d'un époxyde insaturé, tel que l'épichorhydrine.

Le document de brevet européen EP-A-925 903 divulgue un pneumatique pour véhicule automobile notamment destiné à permettre l'évacuation de la charge électrostatique de la carrosserie du véhicule vers le sol de roulage.

A cet effet, la bande de roulement de ce pneumatique comporte, sur toute sa circonférence et débouchant sur sa face radialement externe, une bande radiale présentant une conductivité électrique élevée qui est à base d'une composition de caoutchouc renforcée avec du noir de carbone, le reste de la bande de roulement étant à base d'une autre composition de caoutchouc de conductivité électrique réduite.

Cette bande de roulement est obtenue, à l'état non vulcanisé, en extrudant parallèlement ces deux compositions de caoutchouc dans deux extrudeuses séparées, en mettant en contact les deux compositions issues de ces extrudeuses à l'extrémité aval d'une tête d'extrusion qui est commune à ces deux extrudeuses, pour obtenir en sortie de ladite tête un extrudat comportant ladite bande radiale au sein de la bande de roulement.

On notera que la bande de roulement ainsi obtenue permet uniquement d'évacuer la charge électrostatique de la carrosserie du véhicule vers le sol de roulage, et non de réduire les interférences radio lors du roulage sur une plaque métallique, par exemple.

Le document de brevet international WO-A-00/27655 au nom de la demanderesse divulgue un pneumatique permettant de minimiser, lors du passage d'un premier tronçon à un second tronçon de roulage présentant des caractéristiques physiques différentes, la puissance des décharges électrostatiques de la bande de roulement.

Le pneumatique décrit dans ce document est tel que sa bande de roulement comporte sur sa circonférence au moins une couche électriquement conductrice reliant sensiblement les faces latérales de ladite bande de roulement entre elles, ladite couche présentant une conductivité supérieure à celle du reste de la bande de roulement.

Le document de brevet japonais JP-A-2 000 185 519 divulgue un profilé extrudé comme décrit dans le préambule de la revendication 1.

Un but de la présente invention est de proposer un profilé extrudé à base d'une composition de caoutchouc réticulable, ledit profilé étant destiné à constituer à l'état réticulé une bande de roulement pour pneumatique et étant délimité en largeur par deux faces latérales reliant entre elles des faces radialement interne et externe pour ladite bande de roulement, des moyens conducteurs étant prévus dans ledit profilé pour relier électriquement ladite face interne à ladite face externe entre lesdites faces latérales et sur la longueur dudit profilé, le reste dudit profilé étant à base d'une matière électriquement isolante,
qui permette de minimiser encore la puissance des décharges électrostatiques de ladite bande de roulement lors du roulage sur lesdits tronçons successifs, et donc les perturbations électrostatiques précitées.

A cet effet, un profilé extrudé selon l'invention est tel que lesdits moyens conducteurs présentent, sur une section transversale dudit profilé, une structure stratifiée comportant des couches électriquement conductrices qui sont sensiblement concentriques et qui présentent une courbure en direction de l'une au moins desdites faces interne et externe, l'une au moins desdites couches affleurant à la surface de ladite face externe, lesdites couches formant un nombre de révolutions compris entre 30 et 70.

Cette structure stratifiée de bande de roulement, lorsqu'elle est utilisée pour un train de pneumatiques équipant un véhicule avec récepteur radio embarqué, permet notamment de réduire d'une manière significative les interférences radio qui peuvent être perçues en modulation d'amplitude, lors d'un roulage sur des éléments de route électriquement conducteurs, sous certaines conditions météorologiques, et cela même pour une usure prononcée desdits pneumatiques.

Selon un exemple de réalisation de l'invention, lesdites couches électriquement conductrices décrivent, sur une section transversale dudit profilé, une pluralité de révolutions sensiblement autour de l'axe longitudinal de symétrie dudit profilé.

Selon un mode de réalisation de l'invention, lesdites couches électriquement conductrices sont globalement enroulées en spirale autour dudit axe longitudinal.

Selon une autre caractéristique de ce mode de réalisation, lesdites couches électriquement conductrices présentent, sur la longueur dudit profilé, une forme de filetage comportant une pluralité de filets hélicoïdaux qui sont centrés sur ledit axe de symétrie.

Plus précisément, ce filetage comporte, sur la longueur dudit profilé, une succession de tronçons identiques Tᵢ (i = 1 à n) qui sont chacun constitués d'une pluralité de filets coniques Fⱼ (j = 1 à m) s'inscrivant sur des troncs de cône sensiblement parallèles entre eux qui sont centrés sur ledit axe de symétrie.

Par filet conique, on entend de manière connue un filet hélicoïdal s'inscrivant sur un tronc de cône, c'est-à-dire s'enroulant en spirale conique sur la surface extérieure d'un cône tronqué.

De plus, chaque filet conique Fⱼ de chacun desdits tronçons Tᵢ s'inscrit sur un tronc de cône qui converge vers l'intérieur du tronc de cône sur lequel s'inscrit le même filet conique Fⱼ d'un tronçon immédiatement consécutif Tᵢ₊₁.

Avantageusement, sur une section transversale dudit profilé, lesdites couches peuvent présenter sensiblement une forme d'arc d'ellipse aplatie dont le grand axe correspond à la direction transversale dudit profilé.

De préférence, lesdites couches électriquement conductrices décrivent, sur une section transversale dudit profilé, un nombre de révolutions sensiblement compris entre 40 et 60. Chacune de ces couches conductrices présente alors une épaisseur sensiblement comprise entre 0,05 et 0,15 mm.

Selon un exemple de réalisation de l'invention, l'une au moins desdites couches électriquement conductrices affleure à la surface de l'une ou de chaque face latérale dudit profilé.

On notera que ces affleurements à la surface des faces latérales, tout comme ceux précités à la surface de la face externe du profilé, peuvent permettent avantageusement de former des contrastes ou des nuances de couleur sur la bande de roulement de pneumatique constituée de ce profilé, par exemple dans le cas où l'on utilise une composition de caoutchouc colorée pour ladite matière isolante.

Selon un mode préférentiel de réalisation de l'invention, lesdits moyens conducteurs comportent en outre un film conducteur à l'emplacement de l'une ou de chaque face latérale dudit profilé.

Ce ou ces films conducteurs permettent de minimiser encore la puissance des décharges électrostatiques précitées et, par conséquent, les interférences radio en résultant

Selon un exemple de réalisation de l'invention, lesdites couches électriquement conductrices sont constituées d'une composition de caoutchouc à base d'au moins un élastomère diénique, qui comprend du noir de carbone à titre de charge renforçante et présente une résistivité électrique inférieure à 10⁸ Ω.cm, par exemple comprise entre 10⁴ et 10⁵ Ω.cm, la résistivité de ladite matière isolante étant nécessairement supérieure à 10⁸ ou 10⁹ Ω.cm. Le taux de noir de carbone dans cette composition est fixé en fonction de la résistivité recherchée.

A titre de noir de carbone, conviennent tous les noirs de carbone conventionnellement utilisés dans les pneumatiques et particulièrement dans les bandes de roulement des pneumatiques, notamment les noirs du type HAF, ISAF, SAF. A titre d'exemples non limitatifs de tels noirs, on peut citer les noirs N115, N134, N234, N339, N347, N375.

Selon un exemple de réalisation, lesdites couches électriquement conductrices sont constituées d'une composition de caoutchouc à base d'au moins un élastomère diénique, ladite composition comprenant une charge inorganique renforçante et une solution ionique conductrice qui comprend :
- un polyéther qui est un copolymère d'oxyéthylène et d'oxypropylène comprenant des unités oxyéthylène à titre majoritaire,
- un sei ionique d'un métal monovalent ou divalent, tel que le perchlorate de lithium ou le dichlorure de zinc, et
- un solvant polaire, tel que le carbonate de polypropylène glycol.

On notera que ces couches conductrices comprennent dans ce cas une solution électrolyte, qui leur confère des propriétés de conduction ionique (en raison du mouvement des charges ioniques), contrairement à des compositions de caoutchouc chargées au noir de carbone qui sont caractérisées par une conduction électronique (en raison du mouvement des électrons). La résistivité électrique de ces couches conductrices peut varier de 10⁶ à 10⁹ Ω.cm.

A titre d'élastomère diénique, on peut utiliser tout homopolymère ou copolymère obtenu par polymérisation d'un monomère diène conjugué ayant de 4 à 12 atomes de carbone ou de plusieurs de ces monomères diènes conjugués entre eux, ou bien d'un ou plusieurs de ces monomères diènes conjugués avec un ou plusieurs composés vinylaromatiques ayant chacun de 8 à 20 atomes de carbone.

A titre de monomères diènes conjugués conviennent notamment le butadiène-1,3, le 2-méthyl-1,3-butadiène, les 2,3-di(alkyle en Cl à C5)-1,3-butadiènes tels que le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyltoluène", le para-tertiobutylstyrène, le divinylbenzène. On notera que le styrène est utilisé à titre préférentiel.

De préférence, on utilise le butadiène-1,3 et/ou l'isoprène comme diène(s) conjugué(s) et le styrène à titre de monomère vinylaromatique, pour l'obtention de copolymères butadiène/ isoprène, styrène/ butadiène, styrène/ isoprène, ou butadiène/ styrène/ isoprène.

Le polyéther utilisable a une viscosité inhérente élevée qui, mesurée à 25° C dans le toluène, est supérieure à 4 dl/g et, de préférence, est comprise entre 4 et 8 dl/g.

A titre encore plus préférentiel, ce polyéther comprend des unités oxyéthylène selon une fraction molaire allant de 85 à 95 %, et des unités oxypropylène selon une fraction molaire allant de 5 à 15 %.

Ce polyéther peut être utilisé dans ladite composition de caoutchouc des couches conductrices selon une quantité allant de 20 à 50 pce (pce : parties en poids pour cent parties d'élastomère(s)).

A titre de sel ionique d'un métal monovalent, on peut par exemple utiliser un sel de lithium, de sodium, de potassium, de césium ou d'argent.

A titre de sel ionique d'un métal divalent, on peut par exemple utiliser un sel de magnésium, de calcium, de cuivre ou de zinc.

Les anions suivants sont par exemple utilisables avec les cations des métaux précités :
Cl⁻, Br⁻, I⁻, NO₃⁻, SCN⁻, ClO₄⁻ , CF₃SO₃⁻.

Ce sel ionique peut être utilisé dans ladite composition de caoutchouc selon une quantité allant de 5 à 30 pce selon le sel utilisé et, de préférence, allant de 10 à 20 pce.

Quant audit solvant polaire, on peut par exemple l'utiliser selon une quantité allant de 5 à 15 pce.

On entend par « charge inorganique », de manière connue, une charge inorganique ou minérale, quelles que soient sa couleur et son origine (naturelle ou de synthèse), encore appelée charge blanche ou parfois charge claire par opposition au noir de carbone.

Egalement de manière connue, on entend par « charge inorganique renforçante » une charge inorganique capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

A titre de charge inorganique renforçante, on peut par exemple utiliser toute silice renforçante connue de l'homme du métier, notamment toute silice précipitée présentant une surface BET ainsi qu'une surface spécifique CTAB toutes deux inférieures à 450 m²/g, même si les silices précipitées hautement dispersibles sont préférées (la surface spécifique BET étant déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987), et la surface spécifique CTAB étant la surface externe déterminée selon la même norme AFNOR-NFT-45007 de novembre 1987).

A titre encore plus préférentiel, la silice utilisée présente des surfaces spécifiques BET ou CTAB qui vont toutes deux de 80 m²/g à 260 m²/g.

Par silice hautement dispersible, on entend toute silice ayant une aptitude très importante à la désagglomération et à la dispersion dans une matrice élastomère, observable de manière connue par microscopie électronique ou optique, sur coupes fines.

Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

Bien entendu, on entend également par charge inorganique renforçante des mélanges de différentes charges inorganiques renforçantes, en particulier de silices hautement dispersibles telles que décrites ci-dessus.

On peut également utiliser, à titre non limitatif, des alumines (de formule Al₂O₃), telles que les alumines à dispersibilité élevée qui sont décrites dans le document de brevet européen EP-A-810 258, ou encore des hydroxydes d'aluminium, tels que ceux décrits dans le document de brevet international WO-A-99/28376.

Le procédé selon l'invention pour l'obtention du profilé extrudé précité consiste :
- à introduire, d'une part, ladite matière électriquement isolante de bande de roulement dans une entrée d'une extrudeuse principale débouchant d'une manière coaxiale sur une tête d'extrusion et, d'autre part, ladite matière électriquement conductrice destinée à constituer lesdits moyens conducteurs de structure stratifiée dans une entrée d'au moins une extrudeuse satellite débouchant radialement en amont de ladite tête d'extrusion à l'intérieur de ladite extrudeuse principale,
- à acheminer la matière isolante et la matière conductrice à l'intérieur des extrudeuses,
- à réaliser, à l'intérieur de ladite extrudeuse principale et en amont de ladite tête d'extrusion, un mélange uniformément réparti de ladite matière isolante et de ladite matière conductrice, la fraction massique de ladite matière isolante étant égale ou supérieure à 80 % et celle de ladite matière conductrice étant inférieure ou égale à 20 % dans ledit mélange, et
- à faire passer ledit mélange dans un canal de ladite tête pour obtenir, en sortie d'un orifice d'extrusion de cette tête, le profilé extrudé et réticulable de bande de roulement.

On notera que le diamètre de l'orifice permettant de faire communiquer l'extrudeuse satellite avec l'extrudeuse principale, ainsi que les débits respectifs d'alimentation de ces extrudeuses en matière isolante et en matière conductrice, déterminent le degré d'homogénéisation du mélange obtenu et la géométrie de la structure stratifiée formée dans le profilé extrudé.

Selon une autre caractéristique de l'invention, la température à l'intérieur de chaque extrudeuse est comprise entre 70 et 90° C.

Selon une autre caractéristique de l'invention, la pression absolue à l'intérieur de ladite tête d'extrusion est comprise entre 20 et 30 bars.

On notera que ce procédé selon l'invention peut être mis en oeuvre en positionnant ladite extrudeuse satellite à une distance variable en amont de la tête d'extrusion, en fonction des caractéristiques dimensionnelles qui sont recherchées pour la structure stratifiée des moyens conducteurs à former dans le profilé extrudé (par exemple le nombre de spires de la spirale obtenue et/ou leur épaisseur).

Pour ce faire, on peut prévoir une pluralité d'orifices le long de l'extrudeuse principale pour faire communiquer l'extrudeuse satellite avec celle-ci, les orifices non utilisés à cet effet étant bien entendu obturés.

On notera également que ce procédé selon l'invention n'est pas limité à la réalisation, à l'intérieur de ladite extrudeuse principale et en amont de ladite tête d'extrusion, d'un mélange uniformément réparti constitué de ladite matière isolante et d'une seule matière conductrice. On pourrait par exemple mélanger ladite matière isolante et plusieurs matières conductrices, au moyen d'une pluralité d'extrudeuses satellites respectivement destinées à extruder ces matières conductrices et débouchant chacune radialement à l'intérieur de l'extrudeuse principale, toujours en amont de la tête d'extrusion.

On notera par ailleurs qu'il est possible de procéder à un refendage du profilé extrudé obtenu selon l'invention (i.e. une division du profilé dans le sens de sa longueur), par exemple si l'on souhaite voir apparaître des motifs colorés particuliers à l'emplacement des faces latérales de la bande de roulement.

Une bande de roulement réticulable ou réticulée pour pneumatique selon l'invention est telle qu'elle est constituée du profilé extrudé défini ci-dessus, et un pneumatique selon un mode de réalisation de l'invention est tel qu'il comporte cette bande de roulement à l'état réticulé.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels:
la Fig. 1a est une vue schématique en section radiale d'une bande de roulement selon un mode de réalisation de l'invention,
la Fig. 1b est une vue schématique perspective d'une partie d'un profilé extrudé selon un exemple de réalisation de l'invention, utilisable dans la bande de roulement de la Fig. 1a,
la Fig. 1c est une vue latérale de détail de ladite partie du profilé extrudé de la Fig. 1b,
la Fig. 2 est une vue schématique en perspective d'un dispositif d'extrusion pour la mise en oeuvre du procédé selon l'invention,
la Fig. 3 est une vue schématique en coupe selon le plan III-III de la Fig. 2 dudit dispositif d'extrusion,

La bande de roulement 1 représentée à la Fig. la présente une section radiale sensiblement trapézoïdale uniquement à des fins de simplification. On comprendra qu'elle pourrait présenter toute forme jugée appropriée, sculptures comprises, pour le type de pneumatique choisi.

Cette bande de roulement 1 est délimitée par une face radialement interne 2, destinée à se trouver en regard des différentes armatures d'un pneumatique (non représentées), par une face radialement externe 3 sur laquelle sont formées des sculptures 3a et qui est destinée à évoluer au contact du sol en roulage, et par deux faces latérales 4 et 5 reliant lesdites faces 2 et 3 entre elles.

La bande de roulement 1 est à base d'une matière électriquement isolante, par exemple comprenant une charge renforçante non conductrice, telle que de la silice.

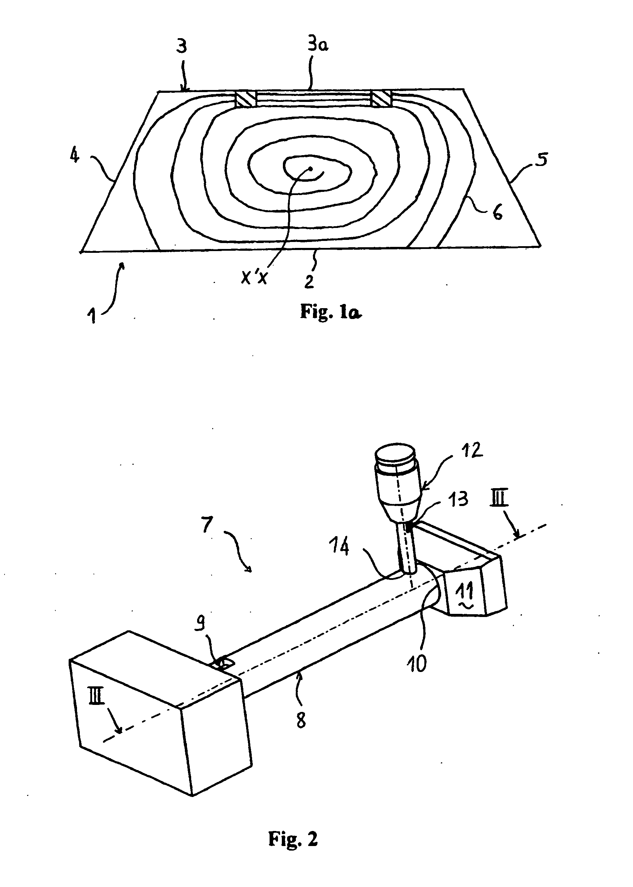

Comme on peut le voir à la Fig. 1a, la bande de roulement 1 comporte, sur une section transversale, des couches électriquement conductrices 6 qui décrivent une pluralité de révolutions sensiblement autour de l'axe longitudinal de symétrie X'X de ladite bande de roulement 1.

Dans l'exemple de la Fig. 1a, ces couches conductrices 6 sont globalement enroulées en spirale autour dudit axe X'X, et elles présentent une section transversale en forme d'arc d'ellipse aplatie dont le grand axe correspond à la direction transversale de la bande de roulement 1.

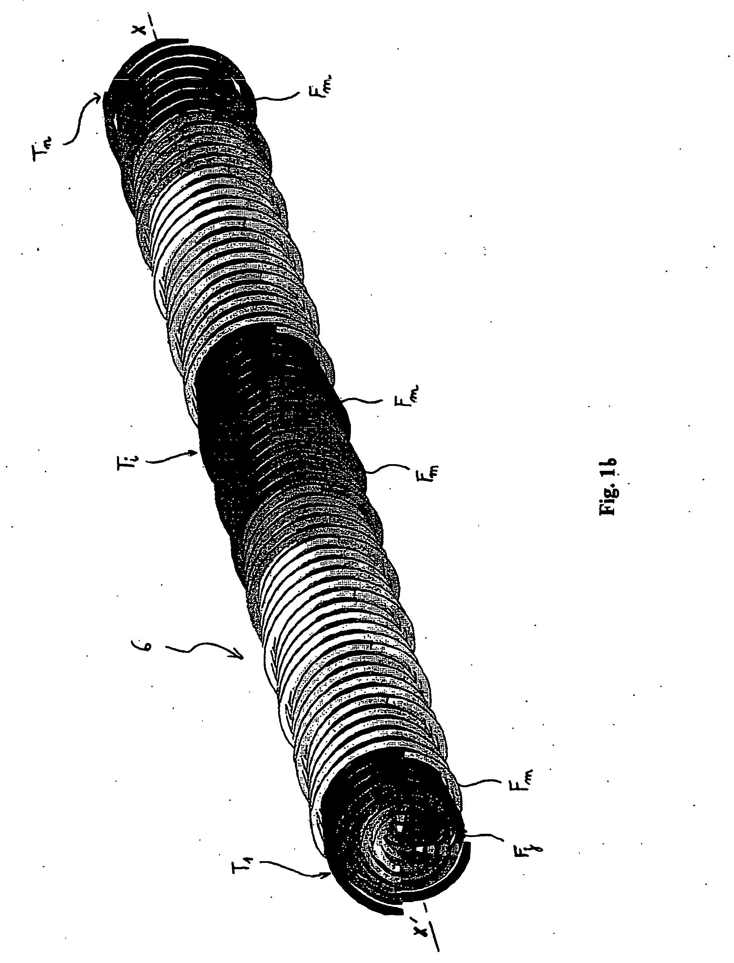

Les Figs. 1b et 1c illustrent schématiquement la forme de filetage de ces couches électriquement conductrices 6, dans la direction longitudinale de la bande de roulement 1.

On voit sur ces Figs. que ce filetage comporte une succession de tronçons identiques Tᵢ (i = 1 à n) qui sont chacun constitués d'un même nombre m de filets coniques Fⱼ (j = 1 à m) s'inscrivant sur des troncs de cône sensiblement parallèles entre eux qui sont centrés sur ledit axe X'X (trois tronçons consécutifs Tᵢ₋₁, Tᵢ et Tᵢ₊₁ sont identifiés en accolades pointillées sur la Fig. 1c).

Comme cela est visible à la Fig. 1c, chaque filet conique Fⱼ de chaque tronçon Tᵢ s'inscrit sur un tronc de cône qui converge vers l'intérieur du tronc de cône sur lequel s'inscrit le même filet conique Fⱼ (i.e. correspondant à une même spire de rangj) d'un tronçon immédiatement consécutif Tᵢ₊₁.

Cet « emboîtement » de filets coniques Fⱼ est également visible à la Fig. 1b, s'agissant en particulier du filet conique le plus extérieur Fₘ de chaque tronçon Tⱼ, qui s'inscrit sur un tronc de cône convergeant vers l'intérieur du tronc de cône sur lequel s'inscrit le filet conique le plus extérieur Fₘ du tronçon adjacent Tᵢ₊₁.

On notera que les Figs. 1a, 1b et 1c ne sauraient en aucune manière limiter la portée de l'invention au nombre de spires, de tronçons et de filets hélicoïdaux présents dans les couches conductrices 6. C'est uniquement à des fins de simplification et de clarté que l'on a choisi de représenter sur ces Figs. un nombre relativement réduit de telles spires, tronçons et filets.

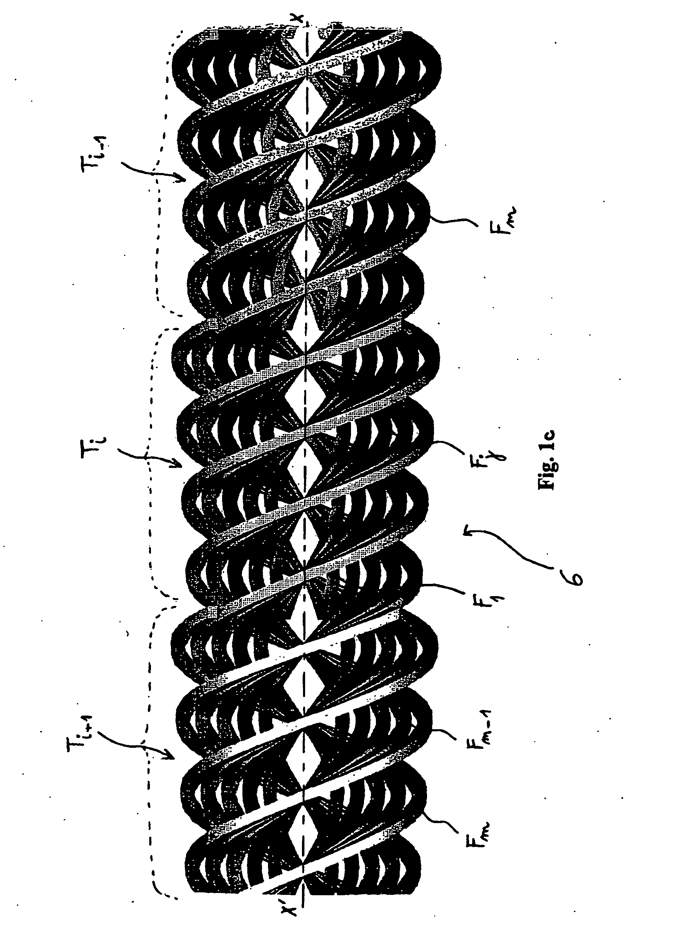

Le dispositif d'extrusion 7 représenté à la Fig. 2 est destiné à produire des profilés extrudés qui sont destinés à constituer, à l'état réticulé, des bandes de roulement 1 comportant chacune les couches conductrices 6 de structure stratifiée.

Ce dispositif 7 est constitué d'une extrudeuse principale 8 qui est destinée à recevoir par une entrée 9 ladite matière isolante de la bande de roulement 1 et qui comporte une sortie 10 débouchant d'une manière coaxiale sur une tête d'extrusion 11, et d'une extrudeuse satellite 12 qui est destinée à recevoir par une entrée 13 une matière destinée à constituer lesdites couches conductrices 6 et qui comporte une sortie 14 débouchant radialement à l'intérieur de l'extrudeuse principale 8, en amont de la tête d'extrusion 11.

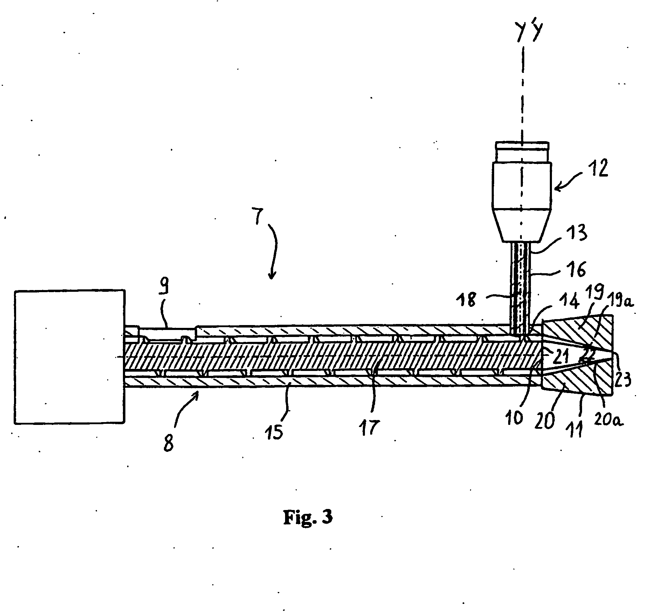

Les structures respectives des extrudeuses 8, 12 et de la tête d'extrusion 11 sont représentées à la Fig. 3.

Chaque extrudeuse 8, 12 est constituée d'un fourreau cylindrique 15, 16 à l'intérieur duquel tourne une vis d'Archimède 17, 18.

La tête d'extrusion 11 comprend une voûte supérieure 19 et une voûte inférieure 20 délimitant, à partir de l'entrée 21 de ladite tête 11, un canal d'écoulement 22 qui débouche sur un orifice d'extrusion 23 d'une lame d'extrusion (non visible), par lequel les profilés extrudés sont refoulés. Cet orifice d'extrusion 23 est délimité par des parois 19a et 20a qui sont respectivement portées par les voûtes 19 et 20.

Dans l'exemple de réalisation de la Fig. 3, la tête d'extrusion 11 est de type « nez à rouleau », étant caractérisée en ce que la paroi 19a de la lame d'extrusion est fixe alors que l'autre paroi 20a est mobile et constituée par la face extérieure d'un rouleau (non représenté).

On comprendra que la présente invention n'est pas limitée à l'utilisation d'une telle tête d'extrusion 11, une tête d'extrusion de type « nez plat » pouvant également être utilisée, dans laquelle les deux parois 19a et 20a de l'orifice d'extrusion 23 sont fixes.

On va décrire ci-après un mode particulier de fonctionnement du dispositif d'extrusion 7, pour l'obtention de profilés de bande de roulement 1 selon un exemple de réalisation de l'invention.

Le dispositif d'extrusion 7 utilisé présente les caractéristiques dimensionnelles suivantes.

Le diamètre intérieur du fourreau 15 de l'extrudeuse principale 8 est de 60 mm, et la vis d'Archimède 17 qu'il contient comporte trois filets. Le diamètre intérieur du fourreau 16 de l'extrudeuse satellite 12 est de 15 mm, la vis d'Archimède 18 qu'il contient comportant un seul filet.

Cette extrudeuse satellite 12 est positionnée de telle manière que son axe d'extrusion Y'Y soit situé à 30 mm en amont de l'entrée 21 de la tête d'extrusion 11.

La tête d'extrusion 11, de type « nez à rouleau », présente une largeur de 200 mm.

On introduit en continu dans les entrées 9 et 13 des extrudeuses 8 et 12 ladite matière isolante et ladite matière conductrice, respectivement, selon des débits d'alimentation de 600 g / minute pour l'extrudeuse principale 8 et de 30 g / minute pour l'extrudeuse satellite 12.

Dans cet exemple de réalisation, la matière isolante « MI » utilisée présente une résistivité comprise entre 10¹⁴ et 10¹⁵ Ω.cm (voir Fig. 6), et elle est constituée d'une composition de caoutchouc réticulable telle que celle constituant les bandes de roulement des pneumatiques de dénomination « MXT», c'est-à-dire comprenant essentiellement :
- à titre de matrice élastomère, un coupage d'un copolymère de styrène et de butadiène préparé en solution (S-SBR) et d'un polybutadiène (BR),
- à titre de charge renforçante, 80 pce (parties en poids pour 100 parties d'élastomères) d'une silice hautement dispersible commercialisée par la société RHODIA sous la dénomination « ZEOSIL 1165 MP », et
- 30 pce d'une huile aromatique ajoutée.

Quant à ladite matière conductrice, elle présente une résistivité électrique inférieure à 10⁸ Ω.cm, plus précisément voisine de 10⁵ Ω.cm, et elle est ici constituée d'une composition de caoutchouc réticulable comprenant essentiellement (sans huile aromatique ajoutée) :
- à titre de matrice élastomère, un coupage S-SBR / BR, et
- à titre de charge renforçante, 60 pce d'un noir de carbone « N234 ».

Les compositions de caoutchouc constituant respectivement les matières isolante et conductrice ont été préparées selon les procédés connus de travail thermo-mécanique de leurs constituants en une ou plusieurs étapes. On peut par exemple les obtenir par un travail thermo-mécanique en une étape dans un mélangeur interne qui dure de 3 à 7 minutes, avec une vitesse de rotation des palettes de 50 tours par minute, ou en deux étapes dans un mélangeur interne qui durent respectivement de 3 à 5 minutes et de 2 à 4 minutes, suivies d'une étape de finition effectuée à environ 80° C, pendant laquelle sont incorporés le soufre et les accélérateurs de vulcanisation.

Les températures utilisées dans les extrudeuses 8, 12 sont comprises entre 70 et 90° C.

La pression absolue à l'intérieur de la tête d'extrusion 11 est de 24 bars.

Les matières isolantes et conductrices sont chacune acheminées par les vis 17 et 18 vers les sorties respectives 10 et 14 des extrudeuses 8 et 12, puis elles sont mélangées l'une à l'autre et homogénéisées par la vis 17 à l'intérieur du tronçon de l'extrudeuse principale 8 qui est compris entre ledit axe Y'Y et la sortie 10 de ladite extrudeuse 8.

Après un passage sous la pression précitée du mélange ainsi obtenu dans le canal 22 de la tête d'extrusion 11, on obtient en sortie de l'orifice d'extrusion 23 un profilé extrudé et réticulable de bande de roulement 1, qui présente les caractéristiques suivantes.

Ce profilé comporte les couches conductrices 6 telles que décrites ci-dessus en référence aux Figs. 1a, 1b et 1c, qui forment environ 50 spires autour dudit axe X'X, sur une section transversale dudit profilé. L'épaisseur moyenne des couches conductrices 6 ainsi obtenues est sensiblement égale à un dixième de millimètre.

On notera que la fraction massique de la matière isolante dans le profilé obtenu est d'environ 90 %, celle de la matière conductrice étant d'environ 10 %.

On procède ensuite aux étapes classiques de confection et de cuisson par réticulation au soufre des pneumatiques selon l'invention, dont chaque bande de roulement est constituée dudit profilé à l'état vulcanisé. Les pneumatiques selon l'invention ainsi obtenus sont de dimensions 175/70 R14 et de dénomination « MXT ».

On notera que ces couches conductrices 6 se retrouvent sous la forme précitée dans la bande de roulement réticulée.

Une première série et une seconde série d'essais comparatifs d'interférences radio en roulage ont été réalisées en utilisant des trains de pneumatiques à l'état neuf pour la première série et, pour la seconde série, à un degré d'usure correspondant à la disparition de la moitié de l'épaisseur de la bande de roulement (i.e. la dimension radiale de la bande de roulement a été réduite de moitié sur toute la dimension axiale de celle-ci).

Chacune de ces deux séries d'essais d'interférences radio a consisté à quantifier les interférences radio perçues en modulation d'amplitude, lors du roulage d'un véhicule d'essai pourvu successivement de ces trains de pneumatiques, ceci par amplification et analyse des signaux correspondants enregistrés au moyen du haut-parleur d'un récepteur radio embarqué dans le véhicule. On a mesuré la décharge électrostatique lors du passage de chaque train de pneumatiques sur un tronçon de route déterminé, par enregistrement de la variation de voltage du haut-parleur.

La première série d'essais a été réalisée sous des mêmes conditions météorologiques (température: 17° C, taux d'humidité de l'air extérieur: 18 %, température de point de rosée de l'air extérieur: -7° C) et dans des mêmes conditions de roulage (tronçons de route comportant des plaques d'égout circulaires de même diamètre sensiblement égal à 66 cm, et vitesse de roulage stabilisée égale à 70 km/h, c'est-à-dire définissant pour le véhicule un temps de passage sur chacune de ces plaques d'environ 34 millisecondes).

De plus, on a utilisé, pour le récepteur radio embarqué sur le véhicule d'essai, une fréquence de 1386 kHz correspondant à une modulation d'amplitude, avec une même amplification du signai issu du récepteur radio pour tous les essais.

Pour la première série d'essais, les trains de pneumatiques suivants ont été utilisés :
* Un train n°1 de pneumatiques témoin « 175/70 R14 MXT » à l'état neuf comportant chacun une bande de roulement exclusivement constituée de ladite matière isolante « MI » de résistivité comprise entre 10¹⁴ et 10¹⁵ Ω.cm, c'est-à-dire à base d'un coupage S-SBR/ BR avec 30 pce d'huile aromatique ajoutée et 80 pce de silice « ZEOSIL 1165 MP ».
* Un train n°6 de pneumatiques selon l'invention à l'état neuf de dimensions 175/70 R14 comportant chacun ladite bande de roulement 1 obtenue pourvue dans sa masse desdites couches conductrices 6 de structure stratifiée, obtenues selon le procédé de l'invention (comme indiqué précédemment, cette bande de roulement est constituée d'un mélange d'environ 90 % de ladite matière isolante « MI » et d'environ 10 % d'une matière conductrice de résistivité voisine de 10⁵ Ω.cm, à base d'un coupage S-SBR / BR et comprenant 60 pce de noir de carbone « N234 ».

Les résultats exposés ci-après prennent en compte la moyenne de cinq roulages sur lesdites plaques. Ils illustrent les niveaux de bruit dus aux interférences radio lors de ces cinq passages, et ils sont donnés par rapport à une base 100 de référence correspondant à la moyenne des roulages dudit train n°1 de pneumatiques témoin. Des résultats inférieurs à 100 témoignent donc de niveaux de bruit plus modérés à l'intérieur du véhicule, c'est-à-dire d'interférences radio plus faibles.

| | |
|---|---|
| Train n°1 témoin | 100 |
| **Train n°6 selon l'invention** | **3.** |

Une bande de roulement 1 selon l'invention comportant lesdites couches conductrices 6 de structure stratifiée (train n°6 selon l'invention) permet de réduire le niveau de ces interférences radio, même par rapport au niveau obtenu avec une bande de roulement comportant des ailes latérales 114, 115 en plus de la couche conductrice 110 (train n°3 témoin).

On notera que le niveau des interférences obtenues avec ce train n°6 selon l'invention est très proche de celui qui caractérise les pneumatiques à bande de roulement conductrice (comprenant majoritairement du noir de carbone à titre de charge renforçante).

**Pour la seconde série d'essais, les trains de pneumatiques suivants ont été utilisés :**
* Un train n°1bis de pneumatiques témoin correspondant audit train n°1 témoin de la première série d'essais, à ceci près que la bande de roulement de chacun des pneumatiques de ce train n° 1bis présente une épaisseur réduite de moitié dans sa direction radiale.
* Un train n°6bis de pneumatiques selon l'invention correspondant audit train n°6 selon l'invention de la première série d'essais, à ceci près que la bande de roulement de chacun des pneumatiques de ce train n° 6bis présente une épaisseur réduite de moitié dans sa direction radiale.

Les résultats exposés ci-après prennent également en compte la moyenne de cinq roulages sur lesdites plaques. Ils illustrent les niveaux de bruit dus aux interférences radio lors de ces cinq passages, et ils sont donnés par rapport à une base 100 de référence correspondant à la moyenne des roulages dudit train n°1 de pneumatiques témoin. Des résultats inférieurs à 100 témoignent donc de niveaux de bruit plus modérés à l'intérieur du véhicule, c'est-à-dire d'interférences radio plus faibles.

Cette seconde série d'essais a été réalisée sous des mêmes conditions météorologiques qui sont toutefois différentes de celles de la première série d'essais (autres conditions hygrométriques et thermiques, notamment). Par conséquent, les valeurs de niveaux d'interférences radio qui sont reportées ci-après ne sauraient être comparées à celles de ladite première série d'essais.

| | |
|---|---|
| **Train n°1bis témoin** | **100** |
| **Train n°6bis invention** | **62.** |

On notera que, la dispersion des valeurs de niveaux de bruits obtenues pour le train n°6 bis selon l'invention, était seulement de l'ordre de 25 %.

Ces résultats montrent qu'une bande de roulement 1 selon l'invention comportant les couches conductrices 6 de structure stratifiée (train n°6bis de l'invention) permet de réduire d'une manière significative le niveau des interférences radio, même à mi-usure de la bande de roulement, par rapport au niveau obtenu avec une bande de roulement isolante (train n°1bis témoin),.

Les pneumatiques de ce train n°6bis selon l'invention constituent donc une solution pérenne, du fait que la réduction sensible des interférences radio qu'ils procurent est vérifiée même à un degré d'usure prononcé des pneumatiques (à mi-épaisseur de la bande de roulement).

On notera par ailleurs que les bandes de roulement 1, 101 selon l'invention incorporant les couches conductrices 6 de structure stratifiée) confèrent aux pneumatiques les incorporant une résistance au roulement réduite qui est tout à fait analogue à celle obtenue avec une bande de roulement isolante conventionnelle, telle que celle dudit train n°1 témoin.

## Revendications

1. Profilé extrudé à base d'une composition de caoutchouc réticulable, ledit profilé étant destiné à constituer à l'état réticulé une bande de roulement (1) pour pneumatique et étant délimité en largeur par deux faces latérales (4 et 5) reliant entre elles des faces radialement interne et externe (2 et 3) pour ladite bande de roulement (1), des moyens conducteurs (6) étant prévus dans ledit profilé pour relier électriquement ladite face interne (2) à ladite face externe (3) entre lesdites faces latérales (4 et 5) et sur la longueur dudit profilé, le reste dudit profilé étant à base d'une matière électriquement isolante, lesdits moyens conducteurs (6) présentant, sur une section transversale dudit profilé, une structure stratifiée comportant des couches électriquement conductrices qui sont sensiblement concentriques et formant un nombre de révolutions et qui présentent une courbure en direction de l'une au moins desdites faces interne et externe (2 et 3), l'une au moins desdites couches affleurant à la surface de ladite face externe (3), ledit profilé extrudé étant **caractérisé en ce que** ledit nombre de révolutions est compris entre 30 et 70.

2. Profilé extrudé selon la revendication 1, **caractérisé en ce que** lesdites couches électriquement conductrices (6) sont globalement enroulées en spirale autour d'un axe longitudinal (X'X), lesdites couches (6) présentant sensiblement, sur une section transversale dudit profilé, une forme d'arc d'ellipse aplatie dont le grand axe correspond à la direction transversale dudit profilé.

3. Profilé extrudé selon la revendication 1 ou 2, **caractérisé en ce que** lesdites couches électriquement conductrices (6) présentent, sur la longueur dudit profilé, une forme de filetage comportant une pluralité de filets hélicoïdaux (Fⱼ (j = 1 à m)) qui sont centrés sur ledit axe (X'X).

4. Profilé extrudé selon la revendication 3, **caractérisé en ce que** ledit filetage comporte, sur la longueur dudit profilé, une succession de tronçons identiques (Tᵢ (i = 1 à n)) qui sont chacun constitués d'une pluralité de filets coniques (Fⱼ (j = 1 à m)) s'inscrivant sur des troncs de cône sensiblement parallèles entre eux qui sont centrés sur ledit axe (X'X).

5. Profilé extrudé selon la revendication 4, **caractérisé en ce que** chaque filet conique (Fⱼ) de chacun desdits tronçons (Tᵢ) s'inscrit sur un tronc de cône qui converge vers l'intérieur du tronc de cône sur lequel s'inscrit le même filet conique (Fⱼ) d'un tronçon immédiatement consécutif (Tᵢ₊₁).

6. Profilé selon l'une des revendications 1 à 5 **caractérisé en ce que** la fraction massique de ladite matière isolante est égale ou supérieure à 80 % de la masse du profilé et celle de ladite matière conductrice est inférieure ou égale à 20 % de la masse du profilé.

7. Profilé extrudé selon l'une des revendications 1 à 5, **caractérisé en ce que** lesdites couches électriquement conductrices (6) présentent chacune une épaisseur sensiblement comprise entre 0,05 et 0,15 mm.

8. Profilé extrudé selon une des revendications précédentes, **caractérisé en ce que** l'une au moins desdites couches électriquement conductrices (6) affleure à la surface de l'une ou de chaque face latérale (4, 5) dudit profilé.

9. Profilé extrudé selon une des revendications précédentes, **caractérisé en ce que** lesdits moyens conducteurs (6) comportent en outre un film conducteur (114) à l'emplacement de l'une ou de chaque face latérale (4, 5) dudit profilé.

10. Profilé extrudé selon une des revendications 1 à 9, **caractérisé en ce que** lesdits moyens conducteurs (6) sont constitués d'une composition de caoutchouc présentant une résistivité électrique inférieure à 10⁸ Ω.cm.

11. Procédé d'obtention d'un profilé extrudé selon une des revendications précédentes, **caractérisé en ce qu'**il consiste :
- à introduire, d'une part, ladite matière électriquement isolante de bande de roulement (1) dans une entrée (9) d'une extrudeuse principale (8) débouchant d'une manière coaxiale sur une tête d'extrusion (11) et, d'autre part, ladite matière électriquement conductrice destinée à constituer lesdits moyens conducteurs de structure stratifiée (6) dans une entrée (13) d'au moins une extrudeuse satellite (12) débouchant radialement en amont de ladite tête d'extrusion (11) à l'intérieur de ladite extrudeuse principale (8),
- à acheminer ladite matière isolante et ladite matière conductrice à l'intérieur desdites extrudeuses (8 et 12),
- à réaliser, à l'intérieur de ladite extrudeuse principale (8) et en amont de ladite tête d'extrusion (11), un mélange uniformément réparti de ladite matière isolante et de ladite matière conductrice, la fraction massique de ladite matière isolante étant égale ou supérieure à 80 % et celle de ladite matière conductrice étant inférieure ou égale à 20 % dans ledit mélange, et
- à faire passer ledit mélange dans un canal (22) de ladite tête d'extrusion (11) pour obtenir, en sortie d'un orifice d'extrusion (23) de ladite tête (11), ledit profilé extrudé et réticulable de bande de roulement (1).

12. Procédé d'obtention d'un profilé extrudé selon la revendication 11, **caractérisé en ce que** la température à l'intérieur de chaque extrudeuse (8, 12) est comprise entre 70 et 90° C.

13. Procédé d'obtention d'un profilé extrudé selon la revendication 11 ou 12, **caractérisé en ce que** la pression absolue à l'intérieur de ladite tête d'extrusion (11) est comprise entre 20 et 30 bars.

14. Bande de roulement (1) réticulable ou réticulée pour pneumatique, **caractérisée en ce qu'**elle est constituée d'un profilé extrudé selon une des revendications 1 à 10.

15. Pneumatique, **caractérisé en ce qu'**il comporte une bande de roulement (1) réticulée selon la revendication 14.

## Patentansprüche

1. Extrudiertes Profil auf der Basis einer vernetzbaren Kautschukzusammensetzung, wobei das Profil dafür vorgesehen ist, im vernetzten Zustand einen Laufstreifen (1) für Luftreifen zu bilden und wobei das Profil in der Breite durch zwei seitliche Flächen (4 und 5) begrenzt ist, die eine radial innere Fläche und eine radial äußere Fläche (2 und 3) des Laufstreifens (1) miteinander verbinden, wobei in dem Profil leitfähige Mittel (6) vorgesehen sind, um die innere Fläche (2) zwischen den beiden seitlichen Flächen (4 und 5) und über die Länge des Profils elektrisch mit der äußeren Fläche (3) zu verbinden, wobei das übrige Profil auf einem elektrisch isolierenden Material basiert, wobei die leitfähigen Mittel (6) im Querschnitt des Profils einer Schichtstruktur aufweisen, die elektrisch leitfähige Lagen umfasst, die in etwa konzentrisch angeordnet sind und die eine Anzahl an Umdrehungen bilden und die eine Krümmung mindestens in Richtung der inneren Fläche oder der äußeren Fläche (2 und 3) aufweisen, wobei mindestens eine der Lagen auf der Oberfläche der äußeren Fläche (3) zu Tage tritt, wobei das extrudierte Profil **dadurch gekennzeichnet ist, dass** die Zahl der Umdrehungen im Bereich von 30 bis 70 liegt.

2. Extrudiertes Profil nach Anspruch 1, **dadurch gekennzeichnet, dass** die elektrisch leitfähigen Lagen (6) im ganzen genommen spiralförmig um eine Längsachse (X'X) gewickelt sind, wobei die Lagen (6) im Querschnitt des Profils in etwa die Form eines abgeflachten elliptischen Bogens aufweisen, dessen Hauptachse der Querrichtung des Profils entspricht.

3. Extrudiertes Profil nach Anspruch 1 oder 2, **dadurch gekennzeichnet, dass** die elektrisch leitfähigen Lagen (6) in Längsrichtung des Profils ein Gewindestruktur aufweisen, die eine Vielzahl spiralförmiger Gewinde umfasst (Fⱼ (j = 1 bis m)), die um die Achse (X'X) zentriert sind.

4. Extrudiertes Profil nach Anspruch 3, **dadurch gekennzeichnet, dass** die Gewindestruktur in Längsrichtung des Profils eine Aufeinanderfolge identischer Teilstücke (Tᵢ (i = 1 bis n)) umfasst, wobei jedes Teilstück aus einer Vielzahl konischer Gewinde (Fⱼ (j = 1 bis m)) besteht, die in Kegelstümpfe eingeschrieben sind, die im wesentlichen parallel zueinander angeordnet und um die Achse (X'X) zentriert sind.

5. Extrudiertes Profil nach Anspruch 4, **dadurch gekennzeichnet, dass** jedes konische Gewinde (Fⱼ) jedes dieser Teilstücke (Tᵢ) in einen Kegelstumpf eingeschrieben ist, der ins Innere des Kegelstumpfes konvergiert, in den das gleiche konische Gewinde (Fⱼ) eines unmittelbar folgenden Teilstücks (Tᵢ₊₁) eingeschrieben ist.

6. Profil nach einem der Ansprüche 1 bis 5, **dadurch gekennzeichnet, dass** der Masseanteil des isolierenden Materials 80 % oder mehr als 80 % der Masse des Profils ausmacht und dass der Masseanteil des leitfähigen Materials 20 % oder weniger als 20 % der Masse des Profils ausmacht.

7. Extrudiertes Profil nach einem der Ansprüche 1 bis 5, **dadurch gekennzeichnet, dass** die elektrisch leitfähigen Lagen (6) jeweils eine Dicke aufweisen, die in etwa im Bereich von 0,05 bis 0,15 mm liegt.

8. Extrudiertes Profil nach einem der vorhergehenden Ansprüche, **dadurch gekennzeichnet, dass** mindestens eine der elektrisch leitfähigen Lagen (6) auf der Oberfläche einer der seitlichen Flächen (4, 5) oder auf der Oberfläche beider seitlichen Flächen (4, 5) zu Tage tritt.

9. Extrudiertes Profil nach einem der vorhergehenden Ansprüche, **dadurch gekennzeichnet, dass** die elektrisch leitfähigen Mittel (6) außerdem eine leitfähige Folie (114) am Ort einer der beiden seitlichen Flächen (4, 5) oder am Ort beider seitlichen Flächen (4, 5) des Profils umfassen.

10. Extrudiertes Profil nach einem der Ansprüche 1 bis 9, **dadurch gekennzeichnet, dass** die leitfähigen Mittel (6) aus einer Kautschukzusammensetzung bestehen, die einen elektrischen Widerstand von weniger als 10⁸ Ω·cm aufweist.

11. Verfahren zur Herstellung eines extrudierten Profils nach einem der vorhergehenden Ansprüche, **dadurch gekennzeichnet, dass** es darin besteht,
- zum einen das elektrisch isolierende Material des Laufstreifens (1) in eine Eintrittsöffnung (9) eines Hauptextruders (8) einzufüllen, der in koaxialer Weise in ein Extrusionswerkzeug (11) mündet, und zum anderen das elektrisch leitfähige Material, das dafür vorgesehen ist, die elektrisch leitfähigen Mittel der Schichtstruktur (6) zu bilden, in eine Eintrittsöffnung (13) mindestens eines Satellitenextruders (12), der radial stromaufwärts des Extrusionswerkzeugs (11) in das Innere des Hauptextruders (8) mündet, einzufüllen,
- das isolierende Material und das leitfähige Material in das Innere der Extruder (8 und 12) zu leiten,
- im Inneren des Hauptextruders (8) und stromaufwärts des Extrusionswerkzeugs (11) ein gleichmäßig verteiltes Gemisch des isolierenden Materials und des leitfähigen Materials zu erzeugen, wobei der Masseanteil des isolierenden Materials 80 % oder mehr als 80 % und der Masseanteil des leitfähigen Materials 20 % oder weniger als 20 % in diesem Gemisch beträgt,
- dieses Gemisch in einen Kanal (22) des Extrusionswerkzeugs (11) zu fördern, um an der Austrittsöffnung einer Extrusionsöffnung (23) des Werkzeugs (11) das extrudierte und vernetzbare Profil des Laufstreifens (1) zu erhalten.

12. Verfahren zur Herstellung eines extrudierten Profils nach Anspruch 11, **dadurch gekennzeichnet, dass** die Temperatur im Inneren jedes Extruders (8, 12) im Bereich von 70 bis 90 °C liegt.

13. Verfahren zur Herstellung eines extrudierten Profils nach Anspruch 11 oder 12, **dadurch gekennzeichnet, dass** der Absolutdruck im Inneren des Extrusionswerkzeugs (11) im Bereich von 20 bis 30 bar liegt.

14. Vernetzbarer oder vernetzter Laufstreifen (1) für Luftreifen, **dadurch gekennzeichnet, dass** er aus einem extrudierten Profil nach einem der Ansprüche 1 bis 10 besteht.

15. Luftreifen, der **dadurch gekennzeichnet ist, dass** er einen vernetzten Laufstreifen (1) nach Anspruch 14 umfasst.

## Claims

1. Extruded profiled element based on a cross-linkable rubber composition, the said profiled element being intended to constitute in the cross-linked condition a tread (1) for a tyre and being delimited in width by two lateral faces (4 and 5) which connect to one another radially inner and outer faces (2 and 3) of the said tread (1), conducting means (6) being provided in the said profiled element to connect the said inner face (2) electrically to the said outer face (3) between the said lateral faces (4 and 5) and all along the length of the said profiled element, the remainder of the profiled element being based on an electrically insulating material, the said conducting means (6), viewed in a cross-section of the said profiled element, having a layered structure comprising electrically conducting layers which are essentially concentric and form a number of turns, and which have a curvature in the direction of at least one of the said inner and outer faces (2 and 3), at least one of the said layers emerging at the surface of the said outer face (3), the said extruded profiled element being **characterised in that** the said number of turns is between 30 and 70.

2. Extruded profiled element according to Claim 2, **characterised in that** the said electrically conducting layers (6) are globally wound in a spiral around a longitudinal axis (X'X) and, viewed in a cross-section of the said profiled element, the said layers (6) have essentially the shape of an arc of a flattened ellipse whose major axis corresponds to the transverse direction of the said profiled element.

3. Extruded profiled element according to Claims 2 or 3, **characterised in that** the said electrically conducting layers (6), along the length of the profiled element, have a filamentary shape comprising a plurality of helicoidal filaments (Fⱼ (j = 1 to m)) which are centred on the said axis (X'X).

4. Extruded profiled element according to Claim 3, **characterised in that** along the length of the profiled element, the said filamentation comprises a succession of identical sections (Tᵢ (i = 1 to n)) each consisting of a plurality of conical filaments (Fⱼ (j = 1 to m)) inscribed on cone sections substantially parallel to one another and centred on the said axis (X'X).

5. Extruded profiled element according to Claim 4, **characterised in that** each conical filament (Fⱼ) of each of the said sections (Tᵢ) is inscribed on a cone section that converges towards the inside of the cone section on which the same conical filament (Fⱼ) of an immediately consecutive section (Tᵢ₊₁) is inscribed.

6. Profiled element according to any of Claims 1 to 5, **characterised in that** the mass fraction of the said insulating material is equal to or greater than 80% of the mass of the profiled element and that of the said conducting material is les than or equal to 20% of the mass of the profiled element.

7. Extruded profiled element according to any of Claims 1 to 5, **characterised in that** the said electrically conducting layers (6) each have a thickness essentially between 0.05 and 0.15 mm.

8. Extruded profiled element according to any of the preceding claims, **characterised in that** at least one of the said electrically conducting layers (6) emerges at the surface of one or of each lateral face (4, 5) of the said profiled element.

9. Extruded profiled element according to any of the preceding claims, char acterised in that the said conducting means (6) also comprise a conducting film (114) at the location of one or of each lateral face (4, 5) of the said profiled element.

10. Extruded profiled element according to any of Claims 1 to 9, **characterised in that** the said conducting means (6) consist of a rubber composition containing carbon black or the reinforcing filler and having an electrical resistivity lower than 10⁸ Ω.cm.

11. Process for obtaining an extruded profiled element according to any of the preceding claims, **characterised in that** it consists in the following:
- introducing, on the one hand the said electrically insulating material for a tread (1) into an input (9) of a main extruder (8) which opens coaxially into an extrusion head (11), and on the other hand the said electrically conducting material intended to constitute the said conducting means having a layered structure (6) into an input (13) of at least one satellite extruder (12) which opens radially upstream from the said extrusion head (11) inside the said main extruder (8),
- propelling the said insulating material and the said conducting material within the said extruders (8 and 12),
- producing, within the said main extruder (8) and upstream from the said extrusion head (11), a uniformly distributed mixture of the said insulating material and the said conducting material, the mass fraction of the insulating material in the said mixture being equal to or greater than 80% and that of the conducting material being less than or equal to 20%, and
- passing the said mixture into a channel (22) of the said extrusion head (11) to obtain, at the outlet of an extrusion orifice (23) of the said extrusion head (11), the said extruded and cross-linkable profiled element for a tread (1).

12. Process for obtaining an extruded profiled element according to Claim 11, **characterised in that** the temperature inside each extruder (8, 12) is between 70° and 90°C.

13. Process for obtaining an extruded profiled element according to Claims 11 or 12, **characterised in that** the absolute pressure inside the said extrusion head (11) is between 20 and 30 bars.

14. Cross-linkable or cross-linked tread (1) for a tyre, **characterised in that** it consists of an extruded profiled element according to any of Claims 1 to 10.

15. Tyre, **characterised in that** it comprises a cross-linked tread (1) according to Claim 14.
